# EUROPÄISCHE PATENTSCHRIFT

(11) **EP 2 121 788 B1**
(45) Veröffentlichungstag und Bekanntmachung des Hinweises auf die Patenterteilung: **03.04.2019**
(21) Anmeldenummer: 08701544.2
(22) Anmeldetag: 17.01.2008
(51) Int. Cl.: C08G 18/12, C08G 18/76, C08G 18/80, C08G 18/42, C09J 175/04, C08G 18/79

(54) **HAFTVERMITTLERZUSAMMENSETZUNG FÜR POLYMERE SUBSTRATE**
BONDING AGENT COMPOUND FOR POLYMER SUBSTRATES
COMPOSITION D'AGENT ADHÉSIF POUR SUBSTRATS POLYMÈRES

(30) Priorität: 17.01.2007 EP 07100635
(43) Veröffentlichungstag der Anmeldung: 25.11.2009
(73) Patentinhaber: Sika Technology AG, 6340 Baar (CH)
(72) Erfinder: BRAUN, Andreas, 9427 Wolfhalden (CH)
(74) Vertreter: Sika Patent Attorneys
(86) Internationale Anmeldenummer: PCT/EP2008/050483
(87) Internationale Veröffentlichungsnummer: WO 2008/087175

(56) Entgegenhaltungen:
- EP-A- 0 511 566
- WO-A-2006/042305
- DE-A1- 19 700 014
- US-A- 5 115 086
- US-A1- 2003 084 995
- US-A1- 2004 039 113

## Beschreibung

### Technisches Gebiet

Die Erfindung betrifft das Gebiet der Haftvermittlerzusammensetzungen und deren Verwendung als Voranstriche für Kleb- und Dichtstoffe.

### Stand der Technik

Haftvermittlerzusammensetzungen werden schon seit längerem eingesetzt, um die Haftung von Kleb- und Dichtstoffen auf unterschiedlichen Untergründen zu verbessern. Bei der grossen Vielzahl und der ständigen Weiterentwicklung solcher Substrate, bedarf es auch immer wieder neuer und spezifischer Haftvermittlerzusammensetzungen.

Ein derartiger Untergrund, der bekanntermassen schwierig zu verkleben ist, sind Lacke. Besonders kritisch sind die neueren Generationen von Automobillacken in Kombination mit einkomponentigen Polyurethanklebstoffen oder -dichtstoffen.

Es wurde deshalb angestrebt, Haftvermittlerzusammensetzungen zu finden, welche sowohl auf diesen neueren Lackgenerationen als auch auf den bisher verwendeten Lacken und Standardkunststoffen gute Haftung zeigen.

So offenbaren US 2003/0084995 A1, US 2005/0100742 A1 sowie US 5,115,086 Haftvermittlerzusammensetzungen enthaltend ein Polyesterharz und polymeres Diphenylmethandiisocyanat (auch bezeichnet als polymeres MDI oder PMDI). Das technische polymere MDI enthält jedoch aufgrund seines Herstellungsverfahrens unausweichlich einen sehr hohen Anteil an monomerem Diphenylmethandiisocyanat (auch bezeichnet als monomeres MDI oder MDI), was wiederum toxikologisch und ökologisch bedenklich ist.

Eine Möglichkeit den Anteil an unerwünschtem monomerem MDI zu reduzieren ist in US 4,643,794 sowie in einem Beispiel in EP-A- 0 441 242 offenbart und besteht darin, eine geringere Menge an polymerem MDI in der Haftvermittlerzusammensetzung einzusetzen, wodurch auch der Anteil an unerwünschtem monomerem MDI reduziert wird. Diese Variante vermag zwar die toxikologischen und ökologischen Bedenken zu beseitigen, führt jedoch insbesondere bei den Automobillacken der neueren Generation zu schlechteren Eigenschaften in der Haftung sowie in der Mechanik.

### Darstellung der Erfindung

Die Aufgabe der vorliegenden Erfindung ist es daher, eine neue Haftvermittlerzusammensetzung zur Verfügung zu stellen, welche toxikologisch und ökologisch vorteilhaft ist und dabei keine Einbusse bezüglich der Eigenschaften der Haftung sowie der Mechanik erleidet.

Überraschenderweise wurde nun gefunden, dass diese Aufgabe durch eine Haftvermittlerzusammensetzung nach Anspruch 1 gelöst werden kann. Das polymere MDI und dadurch unausweichlich auch das monomere MDI werden hierbei teilweise durch kostengünstige, toxikologisch und ökologisch unbedenklichere Polyisocyanate ersetzt, wobei die sehr guten Hafteigenschaften erhalten bleiben oder sich sogar noch verbessern.

Weiterhin betrifft die Erfindung ein beschichtetes Substrat gemäss Anspruch 15.

Weitere besonders bevorzugte Ausführungsformen der Erfindung sind Gegenstand der abhängigen Ansprüche.

### Wege zur Ausführung der Erfindung

Die vorliegende Erfindung betrifft eine Haftvermittlerzusammensetzung, welche mindestens ein Isocyanat-Gruppen aufweisendes spezifisches Bindemittel enthält.

Dieses spezifische Bindemittel wird hergestellt aus einer Mischung eines Polyesterharzes **A,** mindestens einem monomeren Diphenylmethandiisocyanat, sowie mindestens einem Polyisocyanat **B,** wobei der Anteil monomeres MDI ≤ 2 Gew.-% und ≥ 0.1 Gew.-%, an der gesamten Zusammensetzung beträgt.

Mit "Poly" beginnende Substanznamen wie beispielsweise Polyisocyanat, Polyurethan, Polyester, Polyvinylchlorid, Polymethylmethacrylat, Polyol oder Polycarbonat, bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Unter "Molekulargewicht" versteht man im vorliegenden Dokument stets das Zahlenmittel des Molekulargewichts Mₙ.

Das Polyesterharz **A** weist mindestens eine OH-Gruppe auf. Bevorzugt ist es amorph und bei Raumtemperatur fest. Der durch die Ring & Kugel- (Ring & Ball) Methode gemessene Schmelzpunkt (Melt Flow) des Polyesterharzes **A** liegt typischerweise über 140 °C, insbesondere im Bereich zwischen 150 und 160 °C. Zusätzlich weist das Polyesterharz **A** bei 25 °C eine Shore-D Härte von vorzugsweise zwischen 70 und 85, insbesondere zwischen 75 und 85, bevorzugt zwischen 77 und 82, auf.

Als Polyesterharz **A** geeignet sind insbesondere Polyesterharze, welche aus mindestens einer Dicarbonsäure und mindestens einem Glykol hergestellt werden. Bevorzugt weist das Polyesterharz **A** ein Molekulargewicht von über 12'000 g/mol, insbesondere zwischen 15'000 und 40'000 g/mol, auf. Weiterhin bevorzugt weist das Polyesterharz **A** eine OH-Zahl zwischen 1 und 10 mg KOH/g, insbesondere zwischen 2 und 9 mg KOH/g, bevorzugt zwischen 3 und 6 mg KOH/g, auf.

Das Polyesterharz **A** ist bevorzugt ein aromatisches Polyesterharz und weist typischerweise folgende Struktur der Formel (I) auf.

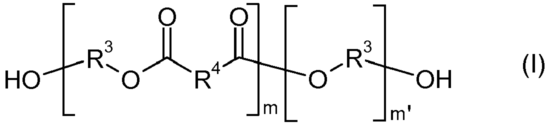

Die Reste R³ und R⁴ stellen hierbei unabhängig voneinander divalente organische Reste dar und m und m' geben die Anzahl Repetiereinheiten an, wobei m' entweder für 0 oder 1 steht.

Besonders bevorzugt werden als Polyesterharze **A** diejenigen, welche innerhalb der 2000-er Produktereihe Vitel® der Firma Bostik kommerziell erhältlich sind. Insbesondere sind dies Vitel® 2100, Vitel® 2180, Vitel® 2190, Vitel® 2000, Vitel® 2200, Vitel® 2300 und Vitel® 2700. Als besonderes bevorzugt gilt Vitel® 2200, beziehungsweise Vitel® 2200B.

Weiterhin enthält die Haftvermittlerzusammensetzung monomeres Diphenylmethandiisocyanat (MDI), das heisst, dass die Menge des monomeren Diphenylmethandiisocyanats (MDI) 0.1 Gew.-%, bezogen auf das Gewicht der gesamten Haftvermittlerzusammensetzung, ist. Insbesondere beträgt der Anteil des monomeren MDIs ≤ 1 Gew.-%, bevorzugt ≤ 0.9 Gew.-%, an der gesamten Haftvermittlerzusammensetzung. Weiterhin bevorzugt ist der Anteil des monomeren MDIs ≥ 0.2 Gew.-%, bevorzugt ≥ 0.5 Gew.-%, bezogen auf das Gewicht der gesamten Haftvermittlerzusammensetzung.

Unter der Bezeichnung monomeres Diphenylmethandiisocyanat (MDI) werden sämtliche Isomere von MDI verstanden, das heisst Diphenylmethan-4,4'-diisocyanat, Diphenylmethan-2,4'-diisocyanat und Diphenylmethan-2,2'-diisocyanat sowie beliebige Gemische dieser Isomeren untereinander. Beispielsweise sind solche monomeren Diphenylmethandiisocyanate unter den Handelsnamen Desmodur® 44 M und Desmodur® 2460 M von der Firma Bayer MaterialScience, Lupranate® M von der Firma BASF und Isonate® von der Firma Dow Plastics kommerziell erhältlich.

In einer bevorzugten Ausführungsform der Erfindung wird das monomere MDI oder ein Teil des monomeren MDIs in Form von technischem polymerem MDI in die Haftvermittlerzusammensetzung eingebracht. Technisches polymeres MDI enthält neben polymerem MDI stets auch monomeres MDI, typischerweise in einer Menge von 20 - 50 Gew.-%. Polymeres MDI ist ein Polymer und weist ein Molekulargewicht von 250 - 500 g/mol, insbesondere 350 - 450 g/mol, bevorzugt 370 - 420 g/mol auf. Somit enthält die Haftvermittlerzusammensetzung in einer bevorzugten Ausführungsform neben monomerem MDI zusätzlich polymeres MDI.

Beispielsweise sind solche bevorzugte polymere Diphenylmethandiisocyanate (PMDI) unter den Handelsnamen PAPI® 20, PAPI® 27, PAPI® 580N und Voranate® M580 von der Firma Dow Plastics, Desmodur® VL R 10 und Desmodur® VL R 20 von der Firma Bayer MaterialScience und Lupranate® M200 von der Firma BASF kommerziell erhältlich.

Der Anteil des technischen PMDIs an der gesamten Haftvermittlerzusammensetzung wird so gewählt, dass der Gesamtanteil des monomeren MDIs 2 Gew.-% nicht übersteigt. Bevorzugt ist die Menge so gewählt, dass der Gesamtanteil des monomeren MDIs ≤ 1 Gew.-%, bevorzugt ≤ 0.9 Gew.-%, an der gesamten Haftvermittlerzusammensetzung beträgt. Weiterhin ist der Anteil des technischen PMDIs an der gesamten Haftvermittlerzusammensetzung so gewählt, dass der Gesamtanteil des monomeren MDIs ≥ 0.1 Gew.-%, insbesondere ≥ 0.2 Gew.-%, bevorzugt ≥ 0.5 Gew.-%, an der Zusammensetzung beträgt. Durch die Verwendung von technischem PMDI in der Haftvermittlerzusammensetzung kann sich die separate Zugabe von monomerem MDI erübrigen.

Bevorzugt liegt der Gewichtsanteil des monomeren Diphenylmethandiisocyanates (MDI) am Gesamtgewicht aller Isocyanat-Gruppen aufweisenden Verbindungen in der Haftvermittlerzusammensetzung zwischen 1 und 20 Gew.-%, insbesondere zwischen 1 und 10 Gew.-%, bevorzugt zwischen 2 und 8 Gew.-%.

Das Polyisocyanat **B** ist ausgewählt aus der Gruppe bestehend aus Biureten von Polyisocyanaten, Isocyanuraten von Polyisocyanaten und Polyurethanen der Formel (II).

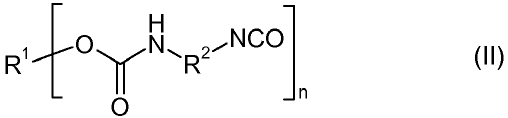

Als Isocyanurate eignen sich Isocyanurate von Polyisocyanaten, insbesondere von Diisocyanaten, wie beispielsweise von 3-Isocyanatomethyl-3,5,5-trimethylcyclohexylisocyanat (Isophorondiisocyanat oder IPDI), Bis-(4-isocyanatocyclohexyl)-methan (H₁₂MDI), 1,6-Hexamethylendiisocyanat (HDI), 2,4- und 2,6-Toluylendiisocyanat (TDI), 4,4'-, 2,4'- und 2,2'-Diphenylmethandiisocyanat (MDI), 1,3-Bis(isocyanatomethyl)benzol (Xylylendiisocyanate oder XDI), 1,3-Bis(isocyanatomethyl)cyclohexan (H₁₂XDI), 2,2,4- und 2,4,4-Trimethyl-1,6-hexamethylendiisocyanat (TMDI) sowie beliebige Gemische der jeweiligen Isomere.

Insbesondere eignen sich Isocyanurate von aliphatischen und cycloaliphatischen Polyisocyanaten, bevorzugt ein Isocyanurat von 1,6-Hexamethylendiisocyanat (HDI).

Insbesondere sind Isocyanurate bevorzugt, welche beispielsweise unter den Handelsnamen Desmodur® N 3300, Desmodur® N 3600, Desmodur® Z 4470 und Desmodur® IL der Firma Bayer MaterialScience, Tolonate® HDT der Firma Rhodia, Basonat® HI 100 der Firma BASF, Luxate® HT 2000 und Luxate® IT 1070 der Firma Lyondell und Vestanat® T 1890 der Firma Degussa kommerziell erhältlich sind.

Als Biurete eignen sich Biurete von Polyisocyanaten, insbesondere von Diisocyanaten. Die entsprechenden Diisocyanate sind bereits bei den Isocyanuraten beschrieben worden. Insbesondere eignen sich Biurete von aromatischen Polyisocyanaten, wie beispielsweise von Tolylendiisocyanat (TDI). Bevorzugt wird ein Biuret von 2,4-Tolylendiisocyanat.

Des Weiteren können auch Biurete und/oder Isocyanurate aus unterschiedlichen Polyisocyanaten zum Einsatz kommen. Ein Beispiel für ein derartiges Isocyanurat ist ein gemischtes TDI/HDI-Isocyanurat, wie es von der Firma Bayer MaterialScience unter dem Handelsnamen Desmodur® HL erhältlich ist.

Als Polyisocyanat **B** eignen sich insbesondere Polyurethane der Formel (II).

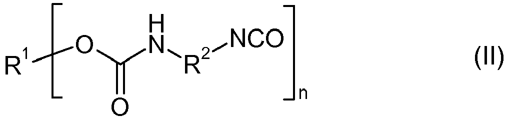

R¹ steht hierbei für einen n-wertigen organischen Rest, R² steht für einen aliphatischen, cycloaliphatischen oder aromatischen organischen Rest und n steht für einen Wert von 2 bis 8, insbesondere für 2, 3, oder 4.

Als Polyurethane der Formel (II) eignen sich insbesondere solche, in welchen R¹ für einen aliphatischen organischen Rest mit 2 bis 15 C-Atomen steht, bevorzugt für einen Rest ausgewählt aus der Gruppe bestehend aus

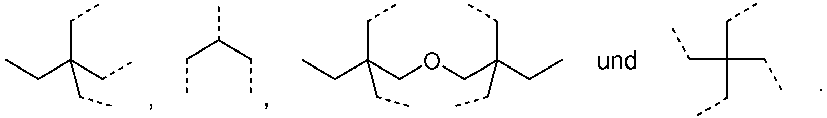

Weiterhin bevorzugt werden Polyurethane der Formel (II), in welchen R² für einen aliphatischen, cycloaliphatischen oder aromatischen organischen Rest steht, insbesondere für einen Rest ausgewählt aus der Gruppe bestehend aus

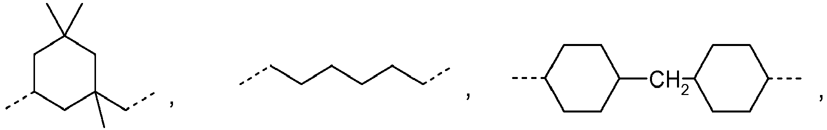

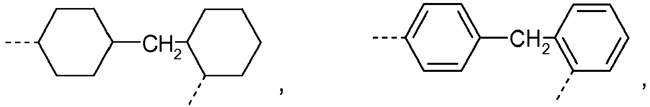

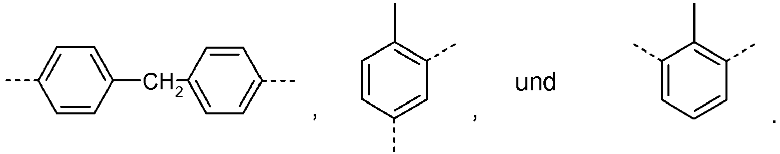

Meist bevorzugt eignen sich Polyurethane der Formel (II), bei welchen R¹ für einen Rest der Formel (III) und R² für einen Rest der Formel (IVa) oder (IVb) steht.

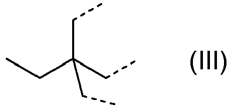

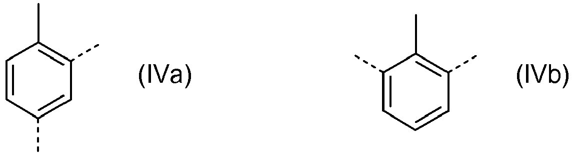

Die gestrichelten Linien in den Formeln dieses Dokumentes stellen jeweils die Bindung zwischen dem jeweiligen Substituenten und dem dazugehörigen Molekülrest dar.

Beispielsweise sind solche bevorzugte Polyurethane der Formel (II) unter dem Handelsnamen Desmodur® L 75 von der Firma Bayer MaterialScience kommerziell erhältlich.

Die Polyurethane der Formel (II) sind insbesondere erhältlich aus einem Polyol der Formel R¹(OH)ₙ und einem Polyisocyanat der Formel OCN-R²-NCO. Dabei liegt ein stöchiometrischer Überschuss der NCO-Gruppen gegenüber den OH-Gruppen, insbesondere im Verhältnis von NCO/OH ≥ 2, vor. Dadurch wird erreicht, dass vorwiegend einfache Addukte entstehen und der Anteil an höhermolekularen Polymeren möglichst gering ist.

Für alle Polyurethane der Formel (II) ist es vorteilhaft, wenn sie ein Isocyanatäquivalentgewicht von 150 - 300 g/eq, insbesondere von 200 - 250 g/eq, aufweisen. Als Isocyanatäquivalentgewicht des Polyurethans der Formel (II) wird hierbei das Molekulargewicht Mₙ des Polyurethans der Formel (II) dividiert durch die Anzahl der Isocyanatgruppen pro Molekül verstanden.

Weiterhin kann es vorteilhaft sein, wenn Mischungen von Isocyanat-Gruppen aufweisenden Verbindungen, insbesondere von Polyisocyanaten **B,** verwendet werden. Typischerweise sind das Mischungen von Isocyanuraten und/oder Biureten und/oder Polyurethanen der Formel (II). Bevorzugt sind Mischungen von Isocyanuraten und Polyurethanen der Formel (II).

Insbesondere bevorzugt enthält die Haftvermittlerzusammensetzung Mischungen von Polyisocyanaten **B** mit polymerem Diphenylmethandiisocyanat (PMDI). Meist bevorzugt sind Mischungen von Isocyanuraten, Polyurethanen der Formel (II) und polymerem MDI.

Der Anteil an Polyesterharz **A** beträgt vorzugsweise 1 - 30 Gew.-%, insbesondere 2 - 20 Gew.-%, bevorzugt 5 - 12 Gew.-%, der gesamten Haftvermittlerzusammensetzung.

Insbesondere ist das Verhältnis von Polyesterharz **A** und allen Isocyanat-Gruppen aufweisenden Verbindungen, insbesondere den Polyisocyanaten **B,** so zu wählen, dass das stöchiometrische Verhältnis der Isocyanat-Gruppen (NCO-Gruppen) zu demjenigen der OH-Gruppen im Bereich zwischen 30:1 und 100:1, insbesondere zwischen 50:1 und 100:1, liegt. Bevorzugt liegt das stöchiometrische Verhältnis der NCO-Gruppen zu demjenigen der OH-Gruppen zwischen 60:1 und 90:1, meist bevorzugt zwischen 70:1 und 80:1.

In einer Ausführungsform enthält die Haftvermittlerzusammensetzung zusätzlich Tris(p-isocyanatophenyl)-thiophosphat. Dieses ist beispielsweise unter dem Handelsnamen Desmodur® RFE von der Firma Bayer MaterialScience erhältlich.

Die Zugabe von Tris(p-isocyanatophenyl)-thiophosphat zu der Haftvermittlerzusammensetzung führt typischerweise zu einer erwünschten Verbesserung der Hafteigenschaften bei gleichzeitiger Möglichkeit den Anteil an polymerem MDI und demzufolge auch den Anteil an monomerem MDI zu reduzieren. Sie ist jedoch aufgrund der relativ hohen Kosten für Tris(p-isocyanatophenyl)-thiophosphat nicht in jedem Fall bevorzugt.

Weiterhin weist die Haftvermittlerzusammensetzung zusätzlich mindestens ein Lösungsmittel auf. Als Lösungsmittel werden insbesondere Ether, Ketone, Ester oder Kohlenwasserstoffe, bevorzugt Diethylether, Tetrahydrofuran, Methylethylketon, Aceton, Hexan, Heptan, Xylol, Toluol oder Acetate, insbesondere Methylacetat, Ethylacetat oder Butylacetat, verwendet.

Weiterhin kann die Haftvermittlerzusammensetzung zusätzlich mindestens ein Silan der Formel R⁵-Si(R⁶)ₐ(OR⁷)₃₋ₐ aufweisen. Der Rest R⁵ steht hierbei für einen Alkylrest mit mindestens einer funktionellen Gruppe, insbesondere einer Epoxy-, (Meth)acrylatester-, Amin- oder Vinyl-Gruppe. Der Rest R⁶ steht für einen Alkylrest mit 1 bis 6 C-Atomen und der Rest R⁷ steht für einen Alkylrest mit 1 bis 4 C-Atomen, insbesondere für Methyl oder Ethyl. Der Index a steht für einen Wert von 0, 1 oder 2, insbesondere für einen Wert von 0.

Der Anteil Silan beträgt vorzugsweise 0.1 - 5 Gew.-% an der gesamten Haftvermittlerzusammensetzung.

Weiterhin weist die Haftvermittlerzusammensetzung typischerweise mindestens einen Russ, insbesondere industriell hergestellter Russ (Carbon Black; im Folgenden als "Russ" bezeichnet), auf. Der Anteil des Russes an der gesamten Haftvermittlerzusammensetzung beträgt vorzugsweise 1 - 20 Gew.-%, insbesondere 2 - 15 Gew.-%, bevorzugt 3 - 10 Gew.-%.

Die Haftvermittlerzusammensetzung kann weitere Bestandteile, wie beispielsweise Katalysatoren, Trocknungsmittel, Thixotropiermittel, Dispergiermittel, Netzmittel, Korrosionsinhibitoren, weitere Haftvermittler, UV- und Hitzestabilisatoren, Pigmente, Farbstoffe und UV-Indikatoren umfassen.

Katalysatoren, welche die Reaktion der Isocyanatgruppen mit Wasser beschleunigen, sind beispielsweise Organozinnverbindungen wie Dibutylzinndilaurat, Dibutylzinndichlorid, Dibutylzinndiacetylacetonat, Bismut-organische Verbindungen oder Bismut-Komplexe, oder amingruppenhaltige Verbindungen wie beispielsweise 2,2'-Dimorpholinodiethylether oder 1,4-Diazabicyclo[2.2.2]-octan, oder andere, in der Polyurethanchemie übliche, Katalysatoren für die Reaktion der Isocyanatgruppen.

Die Haftvermittlerzusammensetzung gemäss der vorhergehenden Beschreibung weist vorzugsweise einen Anteil an Bindemittel von 5 - 50 Gew.-%, insbesondere 10 - 30 Gew.-%, bevorzugt 15 - 25 Gew.-%, an der gesamten Zusammensetzung auf.

Die Herstellung des Bindemittels erfolgt bevorzugt durch Vorlegen des, typischerweise in einem Lösungsmittel gelösten, Polyesterharzes A und anschliessender Zugabe der Isocyanat-Gruppen enthaltenden Verbindungen. Werden mehrere Isocyanat-Gruppen enthaltende Verbindungen verwendet, also beispielsweise ein Isocyanurat eines Polyisocyanates und ein Polyurethan der Formel (II), so können sie dem gelösten Polyesterharz A bereits als Mischung oder einzeln nacheinander zugegeben werden.

Ein alternatives Herstellungsverfahren ist die Vorlage des Polyisocyanates **B,** beziehungsweise der Isocyanat-Gruppen enthaltenden Verbindungen, und anschliessender Zugabe des Polyesterharzes **A.**

Die beschriebene Haftvermittlerzusammensetzung eignet sich besonders als Voranstrich, vorzugsweise als Voranstrich für Kleb- und/oder Dichtstoffe. Durch Verwendung eines derartigen Voranstrichs wird die Haftung verbessert.

Die Applikation der Haftvermittlerzusammensetzung kann mittels Tuch, Filz, Rolle, Sprühen, Schwamm, Pinsel, Tauchbeschichten oder dergleichen erfolgen und kann sowohl manuell als auch mittels Roboter erfolgen.

Weiterhin umfasst die vorliegende Erfindung auch ein Verfahren zur Verklebung oder zum Abdichten. Von diesem Verfahren sind insbesondere die folgenden drei Varianten bevorzugt.

Die erste Variante umfasst die Schritte
i) Applikation einer Haftvermittlerzusammensetzung gemäss vorhergehender Beschreibung auf ein zu verklebendes oder abzudichtendes Substrat **S1;**
ii) Applikation eines Klebstoffes oder Dichtstoffes auf die abgelüftete Haftvermittlerzusammensetzung, welche sich auf dem Substrat **S1** befindet;
iii) Kontaktieren des Klebstoffes oder Dichtstoffes mit einem zweiten Substrat **S2;**

Die zweite Variante umfasst die Schritte
i') Applikation einer Haftvermittlerzusammensetzung gemäss vorhergehender Beschreibung auf ein zu verklebendes oder abzudichtendes Substrat **S1;**
ii') Applikation eines Klebstoffes oder Dichtstoffes auf die Oberfläche eines zweiten Substrates **S2;**
iii') Kontaktieren des Klebstoffes oder Dichtstoffes mit der abgelüfteten Haftvermittlerzusammensetzung, welche sich auf dem Substrat **S1** befindet;

Die dritte Variante umfasst die Schritte
i") Applikation einer Haftvermittlerzusammensetzung gemäss vorhergehender Beschreibung auf ein zu verklebendes oder abzudichtendes Substrat **S1;**
ii") Ablüften der Haftvermittlerzusammensetzung;
iii") Applikation eines Klebstoffes oder Dichtstoffes zwischen die Oberflächen des Substrates **S1** und **S2;**

In allen drei Varianten besteht das zweite Substrat **S2** aus demselben oder aus einem unterschiedlichen Material wie das Substrat **S1.**

Typischerweise schliesst sich anschliessend an den Schritt iii), iii') oder iii") ein Schritt iv) des Aushärtens des Kleb- oder Dichtstoffes an.

Weiterhin umfasst die vorliegende Erfindung ein mit einer Haftvermittlerzusammensetzung, wie sie vorgängig bereits beschrieben worden ist, beschichtetes Substrat **S1** und/oder **S2,** welches insbesondere ein Kunststoff, ein Glas, eine Glaskeramik, ein Metall, ein mit Lack beschichtetes Metall, eine Metalllegierung oder eine mit Lack beschichtete Metalllegierung ist.

Handelt es sich bei den Substraten **S1** und/oder **S2** um einen Kunststoff, so ist dieser insbesondere ausgewählt aus der Gruppe bestehend aus Polyvinylchlorid (PVC), Acrylnitril-Butadien-Styrol-Copolymer (ABS), Polymethylmethacrylat (PMMA) und Polycarbonat (PC).

Handelt es sich bei den Substraten **S1** und/oder **S2** um ein Metall, so ist dies insbesondere ein beschichtetes Metall oder eine beschichtete Metalllegierung, bevorzugt ein Metall oder eine Metalllegierung, welches oder welche mit einem Lack beschichtet ist. Bevorzugte Metalle und Metalllegierungen sind insbesondere solche, wie sie im Automobilbau verwendet werden. Typischerweise sind dies Aluminium, Magnesium und deren Legierungen sowie Stahl, insbesondere verzinkter Stahl.

Als besonders bevorzugte Lacke sind Lacke von Transportmitteln, insbesondere Automobillacke, Automobildecklacke und KTL-Beschichtungen, zu nennen. Als meist bevorzugte Lacke sind Automobillacke der neueren Generation, insbesondere Mehrfacheinbrand-Lacke, zu nennen, die dafür bekannt sind, bei Kleb- und/oder Dichtstoffen, insbesondere bei einkomponentigen feuchtigkeitshärtenden Polyurethanklebstoffen oder -dichtstoffen, Haftprobleme zu verursachen.

Handelt es sich bei den Substraten **S1** und/oder **S2** um Glas oder um Glaskeramik werden insbesondere Glas oder Glaskeramiken verstanden, wie sie typischerweise in Fahrzeugscheiben vorkommen, beziehungsweise im Randbereich von Fahrzeugscheiben aufgebracht sind. Der Aufbau und die Herstellung solcher Glaskeramiken sind dem Fachmann bekannt.

Klebstoffe und Dichtstoffe sind in ihrem Aufbau und in ihren Eigenschaften sehr ähnlich. Um ihre Funktion optimal zu erfüllen, benötigen beide eine gute Haftung auf dem Untergrund. Bei den Klebstoffen sind die Anforderungen an die Haftung, beziehungsweise an die Kräfte, die zwischen Substrat und Klebstoff übertragen werden müssen, jedoch deutlich höher als bei den Dichtstoffen. Deshalb wird die Haftvermittlerzusammensetzung insbesondere bei Klebstoffen verwendet.

Als Klebstoff kann grundsätzlich jeder ein- oder mehrkomponentige Klebstoff verwendet werden. Vorzugsweise wird ein feuchtigkeitshärtender Klebstoff verwendet, insbesondere ein Klebstoff, dessen Aushärtung mittels Luftfeuchtigkeit erfolgt. Einerseits sind dies Klebstoffe basierend auf Silangruppen-terminierten Polymeren, wie sie dem Fachmann unter der Bezeichnung "MS-Polymere" bekannt sind, oder andererseits basierend auf Silangruppenterminierten Polyurethanen, wie sie dem Fachmann unter der Bezeichnung "SPUR" (**S**ilane Terminated **P**oly**ur**ethanes) bekannt sind. Die vorteilhaften Haftverbesserungen haben sich jedoch insbesondere bei Polyurethanklebstoffen oder -dichtstoffen gezeigt, insbesondere bei Polyurethanklebstoffen, welche Isocyanatgruppen aufweisende Polyurethanpolymere enthalten. Derartige Polyurethanklebstoffe sind kommerziell breit erhältlich, insbesondere unter dem Namen Sikaflex® oder SikaTack® von Sika Schweiz AG.

Als geeignete Klebstoffe auf Basis von Isocyanat-terminierten Polymeren werden ebenfalls zweikomponentige Polyurethanklebstoffe verstanden, deren erste Komponente ein Amin- oder ein Polyol und deren zweite Komponente ein Isocyanatgruppen aufweisendes Polymer oder ein Polyisocyanat umfasst. Beispiele für solche zweikomponentige bei Raumtemperatur härtende Polyurethanklebstoffe sind solche aus der SikaForce® -Produktlinie, wie sie kommerziell erhältlich sind von Sika Schweiz AG.

Als geeignete Klebstoffe auf Basis von Isocyanat-terminierten Polymeren sind weiterhin reaktive Polyurethan-Heissschmelzklebstoffe zu verstehen, die ein thermoplastisches Polymer sowie ein Isocyanat-terminiertes Polymer oder ein thermoplastisches Isocyanat-terminiertes Polymer enthalten. Solche reaktiven Polyurethan-Heissschmelzklebstoffe werden aufgeschmolzen und verfestigen sich einerseits beim Abkühlen und vernetzen andererseits über eine Reaktion mit Luftfeuchtigkeit. Beispielsweise sind solche reaktiven Polyurethan-Heissschmelzklebstoffe unter dem Namen SikaMelt® kommerziell erhältlich bei Sika Schweiz AG.

Weiterhin umfasst die vorliegende Erfindung ebenfalls verklebte oder abgedichtete Artikel, welche durch ein Verfahren, wie es vorhergehend beschrieben wurde, erhalten werden.

Bei diesen Artikeln handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff. Bevorzugt sind solche Artikel auch Anbauteile, insbesondere auch Modulteile, welche an der Fertigungslinie als Module verwendet werden und insbesondere an- oder eingeklebt werden. Insbesondere werden diese vorgefertigten Anbauteile im Transportmittelbau eingesetzt. Beispielsweise sind derartige Anbauteile Führerkabinen von Lastkraftwagen oder von Lokomotiven oder Schiebedächer von Automobilen. Bevorzugt handelt es sich bei diesen Artikeln um Fensterscheiben von Transportmitteln, insbesondere um Fensterscheiben von Automobilen und Lastkraftwagen.

### Beispiele

### Herstellung der Haftvermittlerzusammensetzungen

Gemäss den Mengen in Tabelle 1 wurde das Polyesterharz **A** im Lösungsmittel oder in einem Teil davon vorgelegt. Dann wurde das Polyisocyanat **B** und/oder das Voranate® M580 (polymeres MDI mit 34 Gew.-% Monomergehalt), allenfalls im Rest des Lösungsmittels gelöst, unter Stickstoffatmosphäre und ständigem Rühren zugegeben und während 1 Stunde bei 30°C gerührt. Anschliessend wurde auf 40°C aufgeheizt und gerührt bis der NCO-Gehalt konstant war. Anschliessend wurde Russ zugegeben und in einer dicht verschliessbaren Blechdose mit Glaskugeln versetzt, verschlossen und während 1 Stunde mit Hilfe einer Red Devil-Schüttelapparatur innig vermischt.

Nach der Vermischung wurden die Glaskugeln abgetrennt und die Haftvermittlerzusammensetzung in einer dicht schliessenden Aluminiumflasche gefüllt.

**Tabelle 1. Haftvermittlerzusammensetzungen (alle Angaben in Gew.-%, mit Ausnahme von ¹⁾[NCO]:[OH] in mol/mol).**

| | ***Ref-1*** | ***Ref-2*** | ***Ref-3*** | ***Ref-4*** | ***Ref-5*** | ***1*** | ***2*** | ***3*** |
|---|---|---|---|---|---|---|---|---|
| Vitel® 2200B | 8.2 | 11.2 | 8.7 | 8.7 | 8.2 | 10.0 | 9.4 | 10.1 |
| Desmodur® N3300 | | 13.1 | 5.1 | 3.4 | | 5.8 | 3.6 | 3.9 |
| Desmodur® L 75 | | | 8.3 | | | | 5.9 | |
| Desmodur® RFE | | | | 20.4 | | | | 11.8 |
| Voranate® M580 | 8.0 | | | | 2.7 | 4.1 | 2.6 | 2.8 |
| Lösungsmittel | 77.8 | 66.7 | 68.9 | 58.6 | 83.1 | 71.0 | 69.5 | 62.4 |
| Russ | 6.0 | 9.0 | 9.0 | 9.0 | 6.0 | 9.0 | 9.0 | 9.0 |
| Total | 100.0 | 100.0 | 100.0 | 100.0 | 100.0 | 100.0 | 100.0 | 100.0 |
| | | | | | | | | |
| NCO-Gruppenhaltige Verbindung | 8.0 | 13.1 | 13.4 | 23.7 | 2.7 | 10.0 | 12.1 | 18.5 |
| monomeres MDI | 2.72 | | | | 0.92 | 1.41 | 0.88 | 0.95 |
| [NCO]:[OH]¹⁾ | 88:1 | 75:1 | 75:1 | 75.1 | 30:1 | 75:1 | 75:1 | 75:1 |

### Testverfahren

### Applikation und Aushärtung

Die Haftvermittlerzusammensetzungen wurden jeweils auf verschiedene Substrate mittels eines Pinsels als Anstrich appliziert. Nach 30 Minuten Ablüftzeit wurden die Klebstoffe als Rundraupe mit einer Kartuschenpresse und einer Düse auf die mit Haftvermittlerzusammensetzung beschichtete Lack- oder Kunststoffoberfläche aufgetragen. Die Klebstofftemperaturen bei der Applikation betrugen 45 °C für "SF-250 DM-2", 80 °C für "STUF", 23 °C für "SF-555" und 60 °C für "SF-655 WM".

Anschliessend wurde der Klebstoff während 7 Tagen bei 23 °C und 50% relativer Luftfeuchtigkeit (Raumtemperatur-Klimalagerung: "KL") ausgehärtet und ein Drittel der Raupe mittels unten beschriebenen Haftungstest getestet. Danach wurde die Probe während weiteren 7 Tagen ins Wasser bei 23 °C gelegt (Wasserlagerung: "WL"). Anschliessend wurde die Haftung durch den Raupentest für ein weiteres Drittel der Raupe getestet. Daraufhin wurden die lackierten Substrate während weiteren 7 Tagen einem Schwitzwasserklima von 100% relativer Luftfeuchtigkeit und 40 °C ("SL"), beziehungsweise bei den Kunststoff-Substraten einem Cataplasmaklima von 100% relativer Luftfeuchtigkeit und 70 °C ("CL"), ausgesetzt und danach die Haftung des letzten Drittels der Raupe ermittelt.

### Lacke

Es wurden Bleche mit den folgenden Decklacken verwendet:
▪ HDCT 4041 von PPG ("HDCT4041");
▪ RK 8046 von DuPont ("RK8046");
▪ RK4126 von DuPont ("RK4126").

Bei diesen Lacken handelt es sich um Automobillacke der neueren Generation. Diese Lacke weisen ein ungenügendes Haftungsverhalten für einkomponentige Polyurethanklebstoffe ohne Vorbehandlung mittels Haftvermittlerzusammensetzungen auf.

### Kunststoffe

Es wurden folgende Kunststoffe verwendet
▪ PVC von Rocholl, Deutschland;
▪ ABS von Rocholl, Deutschland;
▪ PMMA von Rocholl, Deutschland;
▪ PC von Rocholl, Deutschland.

### Klebstoffe

Es wurden folgende Klebstoffe verwendet, die von der Sika Schweiz AG kommerziell erhältlich sind:
▪ Sikaflex®-250 DM-2 "SF-250 DM-2"; hochmoduliger einkomponentiger Polyurethanklebstoff;
▪ SikaTack®-Ultrafast "STUF"; niedermoduliger einkomponentiger Polyurethanklebstoff;
▪ Sikaflex®-655 WM "SF-655 WM"; einkomponentiger "warm melt" Polyurethanklebstoff;
▪ Sikaflex®-555 "SF-555"; einkomponentiger Silangruppen-terminierter Polyurethanklebstoff.

### Haftungstest ("Raupentest")

Die Haftung des Klebstoffes wurde mittels ,Raupentest' getestet. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Plazieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)
"P" bezeichnet in der Wertung eine Ablösung des Primers vom Untergrund, "RA" bedeutet Randablösung und "L" bedeutet Lackbruch.

Testresultate mit Kohäsionsbruchwerten von weniger als 75% gelten als ungenügend.

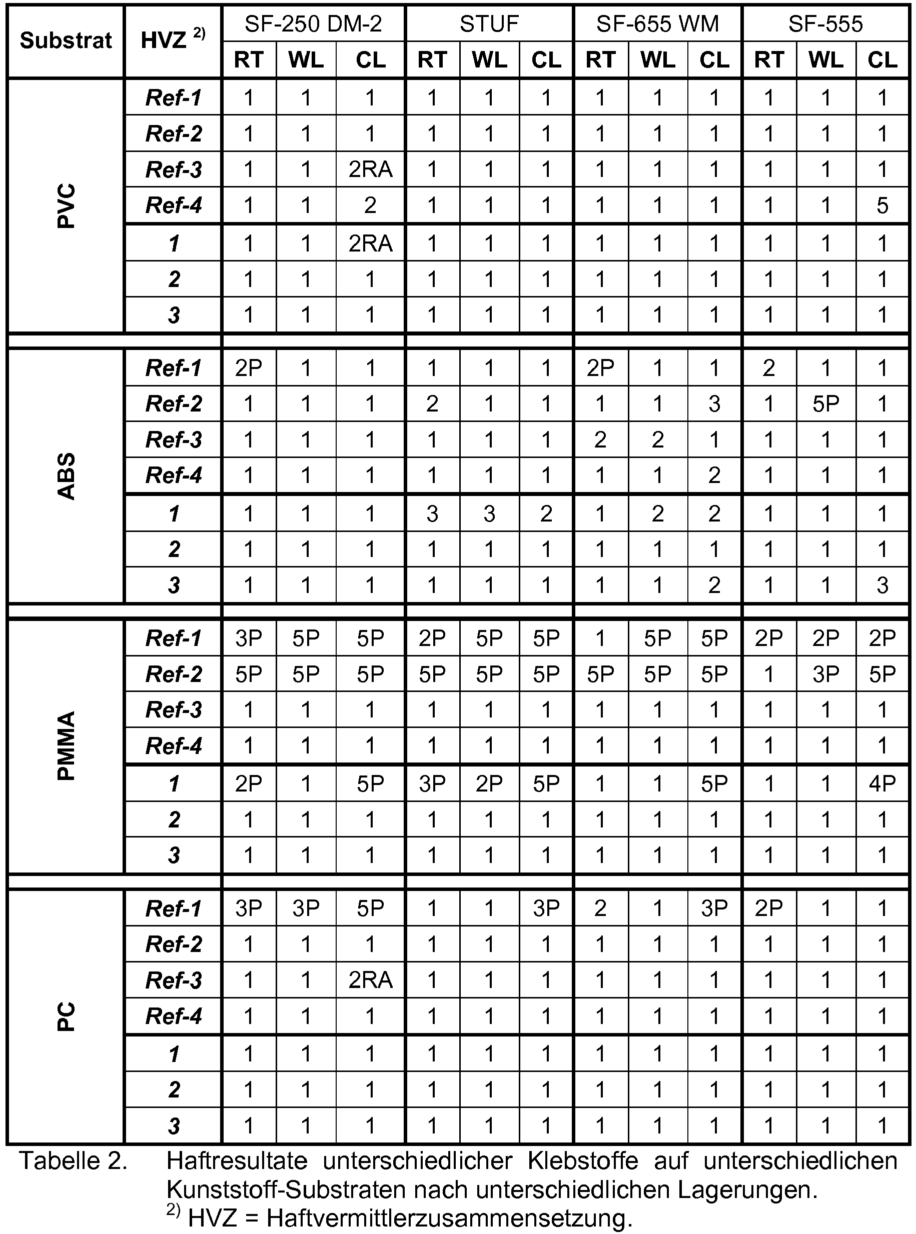

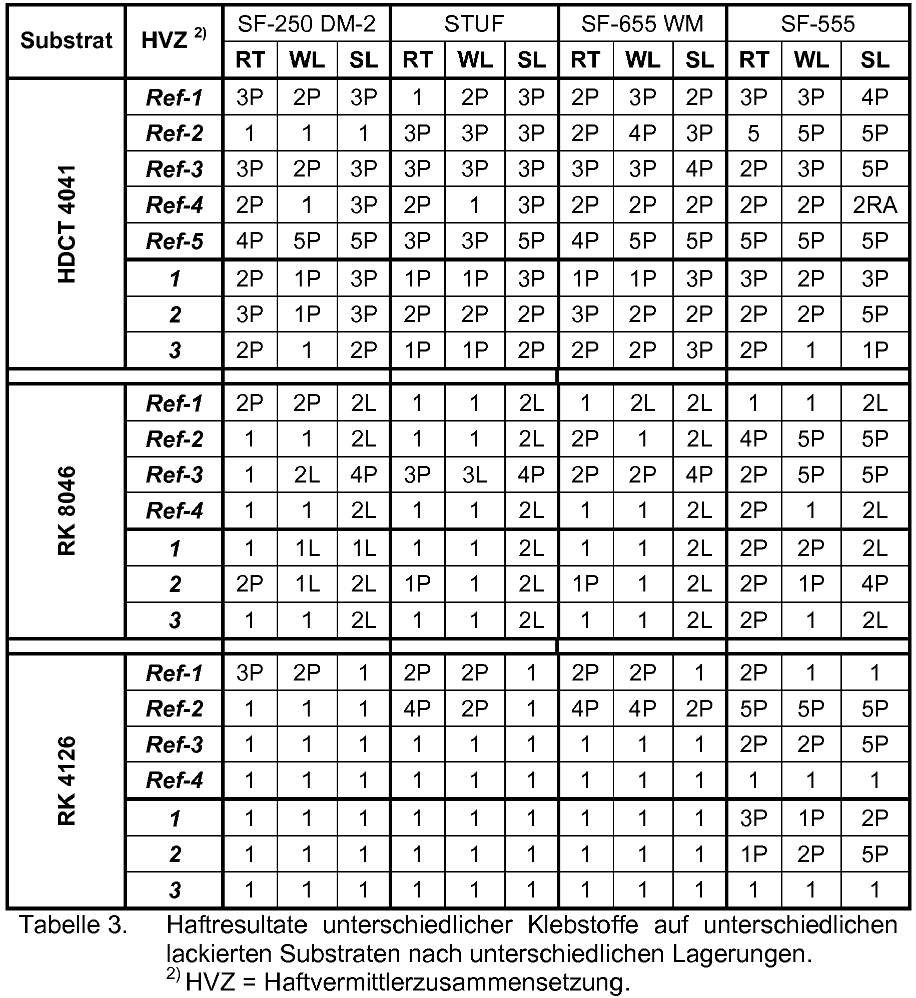

### Resultate

Die Haftresultate sind in den Tabellen 2 und 3 zusammengestellt. Sie zeigen, dass die erfindungsgemässen Beispiele äusserst gute Haftung auf Kunststoffen und lackierten Substraten aufweisen. Insbesondere Beispiele 2 und 3, welche ein Gehalt an monomerem MDI von weniger als 1 Gew.-% aufweisen, zeigen trotz des geringen Gehalts an monomerem MDI eine besonders gute Haftung.

## Patentansprüche

1. Haftvermittlerzusammensetzung enthaltend
mindestens ein Isocyanat-Gruppen aufweisendes Bindemittel, welches hergestellt wird aus einer Mischung von
a) mindestens einem Polyesterharz A, welches mindestens eine OH-Gruppe aufweist;
b) mindestens einem monomeren Diphenylmethandiisocyanat (MDI);
c) mindestens einem Polyisocyanat B, welches ausgewählt ist aus der Gruppe bestehend aus
Biureten von Polyisocyanaten;
Isocyanuraten von Polyisocyanaten;
Polyurethanen der Formel (II); 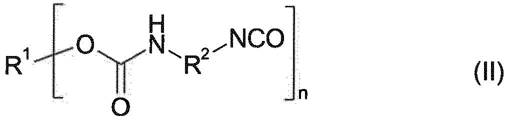
wobei R¹ für einen n-wertigen organischen Rest steht;
R² für einen aliphatischen, cycloaliphatischen oder aromatischen organischen Rest steht;
und n für einen Wert von 2 bis 8, insbesondere für 2, 3 oder 4 steht;
wobei der Gehalt des monomeren Diphenylmethandiisocyanates (MDI) in der Haftvermittlerzusammensetzung ≤ 2 Gew.-%, bezogen auf das Gewicht der gesamten Haftvermittlerzusammensetzung, ist, und der Anteil des monomeren MDIs ≥ 0.1 Gew.-% bezogen auf das Gewicht der gesamten Haftvermittlerzusammensetzung, ist, und die Haftvermittlerzusammensetzung zusätzlich mindestens ein Lösungsmittel aufweist.

2. Haftvermittlerzusammensetzung gemäss Anspruch 1, **dadurch gekennzeichnet, dass** die Haftvermittlerzusammensetzung zusätzlich polymeres Diphenylmethandiisocyanat (PMDI) enthält.

3. Haftvermittlerzusammensetzung gemäss einem der vorhergehenden Ansprüche, **dadurch gekennzeichnet, dass** das Polyesterharz **A** herstellbar ist aus mindestens einer Dicarbonsäure und mindestens einem Glykol.

4. Haftvermittlerzusammensetzung gemäss einem der vorhergehenden Ansprüche, **dadurch gekennzeichnet, dass** das Polyesterharz **A** eine OH-Zahl zwischen 1 und 10 mg KOH/g, insbesondere zwischen 2 und 9 mg KOH/g, bevorzugt zwischen 3 und 6 mg KOH/g, aufweist.

5. Haftvermittlerzusammensetzung gemäss einem der vorhergehenden Ansprüche, **dadurch gekennzeichnet, dass** der Gehalt des monomeren Diphenylmethandiisocyanates (MDI) ≤ 1 Gew.-%, insbesondere ≤ 0.9 Gew.-%, bezogen auf das Gewicht der gesamten Haftvermittlerzusammensetzung beträgt.

6. Haftvermittlerzusammensetzung gemäss einem der vorhergehenden Ansprüche, **dadurch gekennzeichnet, dass** das Isocyanurat ein aliphatisches Isocyanurat, insbesondere ein Isocyanurat von 1,6-Hexamethylendiisocyanat (HDI), ist.

7. Haftvermittlerzusammensetzung gemäss einem der vorhergehenden Ansprüche, **dadurch gekennzeichnet, dass** R¹ für einen aliphatischen organischen Rest mit 2 bis 15 C-Atomen, bevorzugt für einen Rest ausgewählt aus der Gruppe bestehend aus 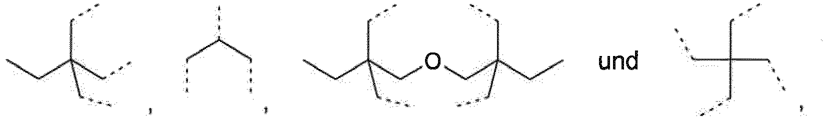 steht.

8. Haftvermittlerzusammensetzung gemäss einem der vorhergehenden Ansprüche, **dadurch gekennzeichnet, dass** R² für einen aliphatischen, cycloaliphatischen oder aromatischen organischen Rest, insbesondere für einen Rest ausgewählt aus der Gruppe bestehend aus 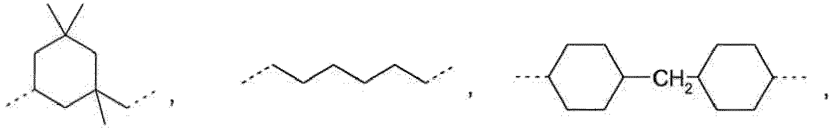 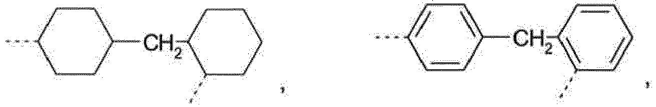 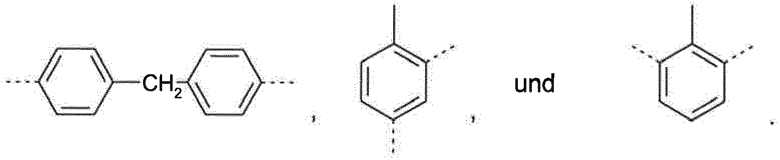 steht.

9. Haftvermittlerzusammensetzung gemäss einem der vorhergehenden Ansprüche, **dadurch gekennzeichnet, dass** R¹ für einen organischen Rest der Formel (III) 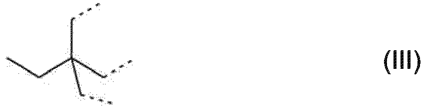 und R² für einen organischen Rest der Formel (IVa) oder (IVb) 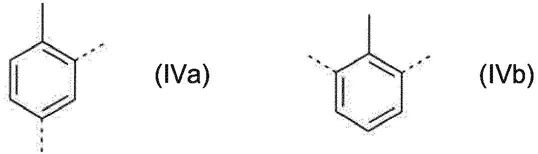 steht.

10. Haftvermittlerzusammensetzung gemäss einem der vorhergehenden Ansprüche, **dadurch gekennzeichnet, dass** der Gewichtsanteil des monomeren Diphenylmethandiisocyanates (MDI) am Gesamtgewicht aller Isocyanat-Gruppen aufweisenden Verbindungen in der Haftvermittlerzusammensetzung zwischen 1 und 20 Gew.-%, insbesondere zwischen 1 und 10 Gew.-%, bevorzugt zwischen 2 und 8 Gew.-%, liegt.

11. Haftvermittlerzusammensetzung gemäss einem der vorhergehenden Ansprüche, **dadurch gekennzeichnet, dass** der Anteil an Polyesterharz **A** 1 - 30 Gew.-%, insbesondere 2 - 20 Gew.-%, bevorzugt 5 - 12 Gew.-%, der gesamten Haftvermittlerzusammensetzung beträgt.

12. Haftvermittlerzusammensetzung gemäss einem der vorhergehenden Ansprüche, **dadurch gekennzeichnet, dass** die Haftvermittlerzusammensetzung zusätzlich Tris(p-isocyanatophenyl)-thiophosphat enthält.

13. Haftvermittlerzusammensetzung gemäss einem der vorhergehenden Ansprüche, **dadurch gekennzeichnet, dass** die Haftvermittlerzusammensetzung zusätzlich mindestens ein Silan der Formel R⁵-Si(R⁶)ₐ(OR⁷)₃₋ₐ enthält, wobei
R⁵ für ein Alkyl mit mindestens einer funktionellen Gruppe, insbesondere einer Epoxy-, (Meth)acrylatester-, Amin- oder Vinyl-Gruppe steht;
R⁶ für einen Alkylrest mit 1 bis 6 C-Atomen steht;
R⁷ für einen Alkylrest mit 1 bis 4 C-Atomen, insbesondere Methyl oder Ethyl steht;
und a für einen Wert von 0, 1 oder 2, insbesondere für einen Wert von 0, steht.

14. Verwendung einer Haftvermittlerzusammensetzung gemäss einem der Ansprüche 1 bis 13 als Voranstrich für Klebstoffe und/oder Dichtstoffe.

15. Ein mit einer Haftvermittlerzusammensetzung gemäss einem der Ansprüche 1 bis 13 beschichtetes Substrat, **dadurch gekennzeichnet, dass** das Substrat ausgewählt ist aus der Gruppe bestehend aus Kunststoff, Glas, Glaskeramik, Metall, mit Lack beschichtetes Metall, Metalllegierung und mit Lack beschichtete Metalllegierung ist.

## Claims

1. Adhesion promoter composition comprising at least one binder which has isocyanate groups and is prepared from a mixture of
a) at least one polyester resin **A,** which has at least one OH group;
b) at least one monomeric diphenylmethane diisocyanate (MDI);
c) at least one polyisocyanate **B,** which is selected from the group consisting of biurets of polyisocyanates;
isocyanurates of polyisocyanates;
polyurethanes of the formula (II); 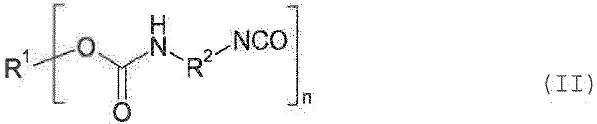
where R¹ is an n-valent organic radical;
R² is an aliphatic, cycloaliphatic or aromatic organic radical;
and n is from 2 to 8, especially 2, 3 or 4;
where the content of the monomeric diphenylmethane diisocyanate (MDI) in the adhesion promoter composition is ≤ 2% by weight, based on the weight of the overall adhesion promoter composition, and the proportion of the monomeric MDI is ≥ 0.1% by weight, based on the weight of the overall adhesion promoter composition, and the adhesion promoter composition additionally comprises at least one solvent.

2. Adhesion promoter composition according to Claim 1, **characterized in that** the adhesion promoter composition additionally comprises polymeric diphenylmethane diisocyanate (PMDI).

3. Adhesion promoter composition according to either of the preceding claims, **characterized in that** the polyester resin A is preparable from at least one dicarboxylic acid and at least one glycol.

4. Adhesion promoter composition according to any of the preceding claims, **characterized in that** the polyester resin A has an OH number between 1 and 10 mg KOH/g, especially between 2 and 9 mg KOH/g, preferably between 3 and 6 mg KOH/g.

5. Adhesion promoter composition according to any of the preceding claims, **characterized in that** the content of the monomeric diphenylmethane diisocyanate (MDI) is ≤ 1% by weight, especially ≤ 0.9% by weight, based on the weight of the overall adhesion promoter composition.

6. Adhesion promoter composition according to any of the preceding claims, **characterized in that** the isocyanurate is an aliphatic isocyanurate, especially an isocyanurate of 1,6-hexamethylene diisocyanate (HDI).

7. Adhesion promoter composition according to any of the preceding claims, **characterized in that** R¹ is an aliphatic organic radical having 2 to 15 carbon atoms, preferably a radical selected from the group consisting of

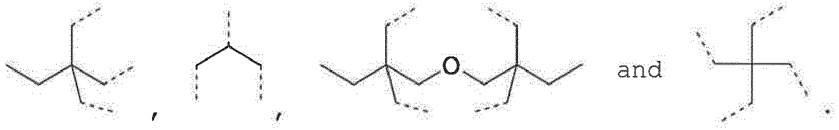

8. Adhesion promoter composition according to any of the preceding claims, **characterized in that** R² is an aliphatic, cycloaliphatic or aromatic organic radical, especially a radical selected from the group consisting of

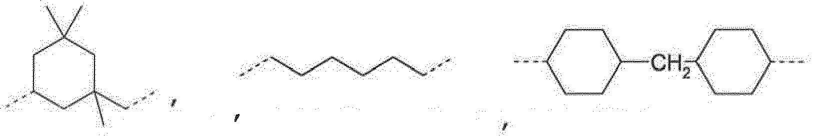

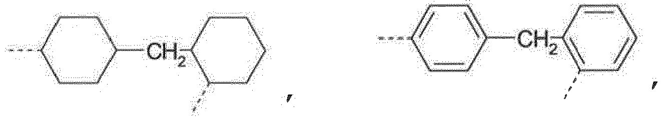

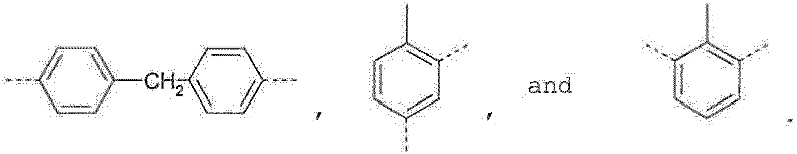

9. Adhesion promoter composition according to any of the preceding claims, **characterized in that** R¹ is an organic radical of the formula (III) 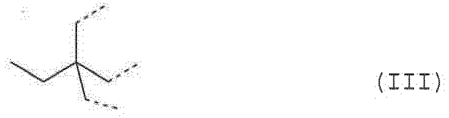 and R² an organic radical of the formula (IVa) or (IVb)

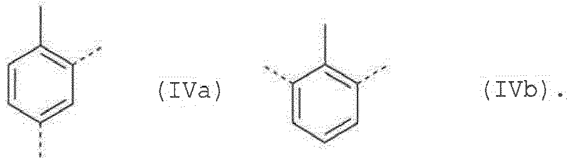

10. Adhesion promoter composition according to any of the preceding claims, **characterized in that** the proportion by weight of the monomeric diphenylmethane diisocyanate (MDI) in the total weight of all compounds having isocyanate groups in the adhesion promoter composition is between 1 and 20% by weight, especially between 1 and 10% by weight, preferably between 2 and 8% by weight.

11. Adhesion promoter composition according to any of the preceding claims, **characterized in that** the proportion of polyester resin **A** is 1 - 30% by weight, especially 2 - 20% by weight, preferably 5 - 12% by weight, of the overall adhesion promoter composition.

12. Adhesion promoter composition according to any of the preceding claims, **characterized in that** the adhesion promoter composition additionally comprises tris(p-isocyanatophenyl) thiophosphate.

13. Adhesion promoter composition according to any of the preceding claims, **characterized in that** the adhesion promoter composition additionally comprises at least one silane of the formula R⁵-Si(R⁶)ₐ(OR⁷)₃₋ₐ, where
R⁵ is an alkyl with at least one functional group, especially an epoxy, (meth)acrylate ester, amine or vinyl group;
R⁶ is an alkyl radical having 1 to 6 carbon atoms;
R⁷ is an alkyl radical having 1 to 4 carbon atoms, especially methyl or ethyl;
and a is a value of 0, 1 or 2, especially a value of 0.

14. Use of an adhesion promoter composition according to any of Claims 1 to 13 as an undercoat for adhesives and/or sealants.

15. A substrate coated with an adhesion promoter composition according to any of Claims 1 to 13, **characterized in that** the substrate is selected from the group consisting of plastic, glass, glass ceramic, metal, painted metal, metal alloy and painted metal alloy.

## Revendications

1. Composition de promoteur d'adhésion, contenant :
au moins un liant comprenant des groupes isocyanate, qui est fabriqué à partir d'un mélange de :
a) au moins une résine de polyester **A,** qui comprend au moins un groupe OH ;
b) au moins un diisocyanate de diphénylméthane monomère (MDI) ;
c) au moins un polyisocyanate **B,** qui est choisi dans le groupe constitué par :
les biurets de polyisocyanates ;
les isocyanurates de polyisocyanates ;
les polyuréthanes de formule (II) ; 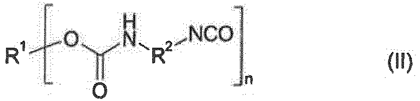
dans laquelle R¹ représente un radical organique n-valent ;
R² représente un radical organique aliphatique, cycloaliphatique ou aromatique ;
et n représente une valeur de 2 à 8, notamment 2, 3 ou 4 ;
la teneur du diisocyanate de diphénylméthane monomère (MDI) dans la composition de promoteur d'adhésion étant ≤ 2 % en poids, par rapport au poids de la composition de promoteur d'adhésion totale, et la proportion du MDI monomère étant ≥ 0,1 % en poids, par rapport au poids de la composition de promoteur d'adhésion totale, et la composition de promoteur d'adhésion comprenant en outre au moins un solvant.

2. Composition de promoteur d'adhésion selon la revendication 1, **caractérisée en ce que** la composition de promoteur d'adhésion contient en outre du diisocyanate de diphénylméthane polymère (PMDI).

3. Composition de promoteur d'adhésion selon l'une quelconque des revendications précédentes, **caractérisée en ce que** la résine de polyester **A** peut être fabriquée à partir d'au moins un acide dicarboxylique et d'au moins un glycol.

4. Composition de promoteur d'adhésion selon l'une quelconque des revendications précédentes, **caractérisée en ce que** la résine de polyester **A** présente un indice OH compris entre 1 et 10 mg de KOH/g, notamment entre 2 et 9 mg de KOH/g, de préférence entre 3 et 6 mg de KOH/g.

5. Composition de promoteur d'adhésion selon l'une quelconque des revendications précédentes, **caractérisée en ce que** la teneur du diisocyanate de diphénylméthane monomère (MDI) est ≤ 1 % en poids, notamment ≤ 0,9 % en poids, par rapport au poids de la composition de promoteur d'adhésion totale.

6. Composition de promoteur d'adhésion selon l'une quelconque des revendications précédentes, **caractérisée en ce que** l'isocyanurate est un isocyanurate aliphatique, notamment un isocyanurate de diisocyanate de 1,6-hexaméthylène (HDI).

7. Composition de promoteur d'adhésion selon l'une quelconque des revendications précédentes, **caractérisée en ce que** R¹ représente un radical organique aliphatique de 2 à 15 atomes C, de préférence un radical choisi dans le groupe constitué par :

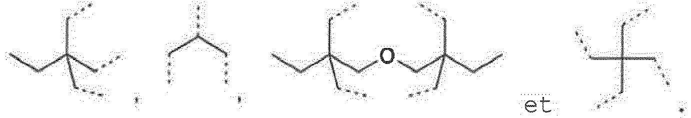

8. Composition de promoteur d'adhésion selon l'une quelconque des revendications précédentes, **caractérisée en ce que** R² représente un radical organique aliphatique, cycloaliphatique ou aromatique, notamment un radical choisi dans le groupe constitué par :

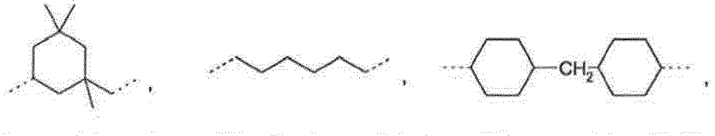

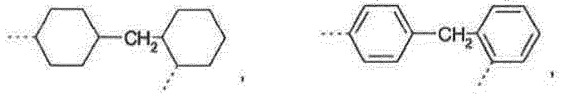

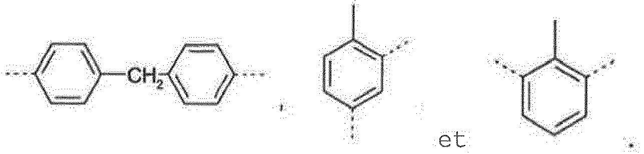

9. Composition de promoteur d'adhésion selon l'une quelconque des revendications précédentes, **caractérisée en ce que** R¹ représente un radical organique de formule (III) 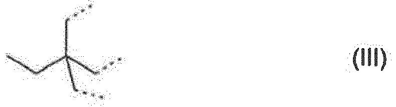 et R² représente un radical organique de formule (IVa) ou (IVb)

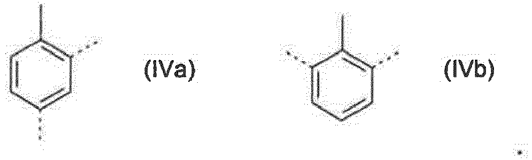

10. Composition de promoteur d'adhésion selon l'une quelconque des revendications précédentes, **caractérisée en ce que** la proportion en poids du diisocyanate de diphénylméthane monomère (MDI) par rapport au poids total de tous les composés comprenant des groupes isocyanate dans la composition de promoteur d'adhésion est comprise entre 1 et 20 % en poids, notamment entre 1 et 10 % en poids, de préférence entre 2 et 8 % en poids.

11. Composition de promoteur d'adhésion selon l'une quelconque des revendications précédentes, **caractérisée en ce que** la proportion de résine de polyester **A** est de 1 à 30 % en poids, notamment de 2 à 20 % en poids, de préférence de 5 à 12 % en poids, de la composition de promoteur d'adhésion totale.

12. Composition de promoteur d'adhésion selon l'une quelconque des revendications précédentes, **caractérisée en ce que** la composition de promoteur d'adhésion contient en outre du thiophosphate de tris(p-isocyanatophényle).

13. Composition de promoteur d'adhésion selon l'une quelconque des revendications précédentes, **caractérisée en ce que** la composition de promoteur d'adhésion contient en outre au moins un silane de formule R⁵-Si(R⁶)ₐ(OR⁷)₃₋ₐ, dans laquelle
R⁵ représente un alkyle contenant au moins un groupe fonctionnel, notamment un groupe époxy, ester de (méth)acrylate, amine ou vinyle ;
R⁶ représente un radical alkyle de 1 à 6 atomes C ;
R⁷ représente un radical alkyle de 1 à 4 atomes C, notamment méthyle ou éthyle ;
et a représente une valeur de 0, 1 ou 2, notamment une valeur de 0.

14. Utilisation d'une composition de promoteur d'adhésion selon l'une quelconque des revendications 1 à 13 en tant que sous-couche pour des adhésifs et/ou des matériaux d'étanchéité.

15. Substrat revêtu avec une composition de promoteur d'adhésion selon l'une quelconque des revendications 1 à 13, **caractérisé en ce que** le substrat est choisi dans le groupe constitué par le plastique, le verre, la vitrocéramique, un métal, un métal revêtu avec un vernis, un alliage métallique et un alliage métallique revêtu avec un vernis.
